# EUROPÄISCHE PATENTSCHRIFT

(11) **EP 2 269 040 B1**
(45) Veröffentlichungstag und Bekanntmachung des Hinweises auf die Patenterteilung: **09.08.2017**
(21) Anmeldenummer: 09728426.9
(22) Anmeldetag: 30.03.2009
(51) Int. Cl.: B31B 70/74, B31B 160/20, G01N 21/898, D06H 1/02, D06H 3/08

(54) **VERFAHREN ZUR HERSTELLUNG VON SÄCKEN AUS GEWEBEMATERIAL**
METHOD FOR PRODUCING BAGS FROM FABRIC MATERIAL
PROCÉDÉ DE FABRICATION DE SACS EN MATÉRIAU TISSÉ

(30) Priorität: 03.04.2008 DE 102008017441
(43) Veröffentlichungstag der Anmeldung: 05.01.2011
(73) Patentinhaber: Windmöller & Hölscher KG, 49525 Lengerich (DE)
(72) Erfinder: DUWENDAG, Rüdiger, 49525 Lengerich (DE); HÄGER, Christian, 48488 Emsbüren (DE); WEHMEYER, Jörg, 49545 Tecklenburg (DE)
(86) Internationale Anmeldenummer: PCT/EP2009/053745
(87) Internationale Veröffentlichungsnummer: WO 2009/121841

(56) Entgegenhaltungen:
- DE-A1- 3 401 826
- DE-A1- 4 312 452
- DE-A1-102006 041 275
- GB-A- 2 243 847
- US-A- 3 962 730
- US-A- 4 065 213
- US-A- 4 920 653
- US-A- 5 774 177
- US-A1- 2005 232 475

## Beschreibung

Die Erfindung betrifft ein Verfahren zur Herstellung von Säcken aus Gewebematerial nach dem Oberbegriff des Anspruchs 1 sowie ein System nach dem Oberbegriff des Anspruchs 10.

Aus der Praxis sowie aus der Patentliteratur sind Verfahren und Vorrichtungen zur Herstellung von Säcken aus Kunststoffgewebe bekannt. Die Säcke werden in entsprechenden Verarbeitungsmaschinen aus Gewebematerial hergestellt. Das Gewebematerial, das als gewebehaltiges Flach- oder Schlauchmaterial vorliegen kann, wird zunächst zu Schlauchabschnitten verarbeitet. Dazu wird gegebenenfalls die Flachbahn zunächst zu einem Schlauchmaterial verarbeitet. Von dem Schlauchmaterial werden Schlauchabschnitte abgetrennt, an die später Böden angeformt werden. Diese Böden können zudem mit Ventilen und/oder zusätzlichen Bodendeckblättern versehen sein. Um die verschiedenen Sackbestandteile und/oder Werkstücke dauerhaft miteinander verbinden zu können, werden diese auf geeignete Weise miteinander verklebt. Dies kann durch einen Klebstoff oder eine Kunststoffschmelze erfolgen. Zusätzlich oder stattdessen kann das Kunststoffmaterial - bevorzugt eine Beschichtung - angeschmolzen werden. Nach dem Fügen der zu verbindenden Elemente und dem Erkalten des Materials ergibt sich eine belastbare Verbindung.

Zur Herstellung von Gewebeschläuchen, welche eingangs beschriebenen Verarbeitungsmaschinen zugeführt werden können, werden in der Praxis häufig Rundwebmaschinen eingesetzt, die aus einzelnen Kunststoffbändchen Rundgewebe erstellen, welche Gewebeschläuche darstellen. Die einzelnen Kunststoffbändchen bestehen oft aus Polypropylen und sind zur Erhöhung der Festigkeit in der Regel gereckt. Im Gewebeschlauch verlaufen diese Bändchen längs und quer, so dass beim späteren Sack in alle möglichen Belastungsrichtungen eine außerordentlich hohe Stabilität gewährleistet ist. Ein solcher Gewebeschlauch wird nach dem Webvorgang aufgewickelt.

Es ist jedoch auch möglich, Flachbahnen zu weben, so dass anschließend Gewebematerial zur Verfügung steht, aus dem an einer beliebigen Stelle vor der Erzeugung von Schlauchstücken ein Gewebeschlauch gebildet werden kann. Wenn im Rahmen dieser Anmeldung von Gewebematerial gesprochen wird, kann damit eine Flachbahn oder eine Schlauchbahn gemeint sein. Man kann das Gewebematerial für diese Fälle auch als Gewebebahn bezeichnen. Gewebematerial an sich ist selbstverständlich unter anderem auch in den Schlauchabschnitten und in den fertigen Säcken enthalten.

Zur weiteren Verarbeitung wird das Gewebematerial in der Regel wieder abgewickelt und mit einer Beschichtung versehen. Anschließend wird das Material bedruckt und zunächst wieder aufgewickelt, um ihn als Wickel der eingangs genannten Verarbeitungsmaschine zuzuführen. Nach dem Beschichtungsvorgang und vor dem Bedruckungsvorgang kann das Gewebematerial ebenfalls auf- und wieder abgewickelt werden, so dass die Beschichtung und die Bedruckung räumlich und/oder zeitlich getrennt erfolgen kann.

Es ist darauf hinzuweisen, dass alle diese Schritte oder Teile dieser Schritte von dem Weben bis zur Sackstapelung auch in einem durchgängigen Prozess durchgeführt werden können, d.h. ohne zwischenzeitliches Aufwickeln des Gewebematerials. Ein durchgängiger Prozess wird oft auch als Inline-Prozess bezeichnet. Insbesondere das Bedrucken kann unmittelbar vor dem Verarbeiten des Schlauches erfolgen.

In der beschriebenen Verarbeitungsmaschine werden aus schlauchförmigem Material zum Teil auch Säcke produziert, die fehlerhaft sind. So können solche Säcke abschnittsweise fehlerbehaftetes Gewebematerial umfassen. Um fehlerbehaftete Säcke ausscheiden zu können, können in Verarbeitungsmaschinen Kontrolltische vorgesehen sein, an denen die gefertigten Säcke visuell kontrolliert werden und bei Bedarf über eine Ausscheideweiche aussortiert werden. Eine solche Vorrichtung und das dazu gehörige Verfahren sind der DE 10 2006 041 275 A1 zu entnehmen. Mit einer visuellen Kontrolle beispielsweise durch das Bedienpersonal können aber in der Regel nur bestimmte Fehler erkannt werden, wie etwa schief aufgebrachte Bodendeckblätter oder nicht vollständig verklebte bzw. gefügte Böden. Gewebefehler können auf diese Weise nicht oder zumindest nicht zuverlässig erkannt werden.

Daher werden in der Verarbeitungsmaschine an einer Stelle, an der das Gewebematerial als Schlauch vorliegt, oft Innenwerkzeuge als Prüfeinrichtung zur Fehlerüberprüfung eingesetzt. Liegt in dem Schlauchmaterial ein Webfehler vor, bei dem beispielsweise Bändchen relativ zu ihrer ordnungsgemäßen Position verschoben sind, so kann im Zuge des Beschichtungsvorganges das Beschichtungsmaterial, durch das dadurch hervorgerufene Loch, in der betreffenden Lage des Schlauchmaterials hindurch gelangen und die beiden Schichten des Schlauchmaterials miteinander verkleben oder verschmelzen.

Die Verklebung der beiden Lagen des Schlauchmaterials ist also ein Hinweis auf das Vorliegen von Fehlern im Gewebe. Das Innenwerkzeug ist nun in der Lage, die Verklebungen bzw. Verlockungen der beiden aufeinander liegenden Lagen des flachgedrückten Schlauches zu lösen. Sollte sich jedoch eine solche Verklebung nicht lösen lassen, wird ein Fehleralarm ausgelöst und die Verarbeitungsmaschine gestoppt. Sodann kann der fehlerhafte Abschnitt des Gewebeschlauches entfernt werden, das Innenwerkzeug wieder in das Innere des Gewebeschlauches eingesetzt und dann die Produktion fortgesetzt werden.

Das genannte Innenwerkzeug dient zusätzlich auch der Breitenkontrolle des Gewebeschlauches. Es ist dazu auf die Innenbreite des Gewebeschlauches abgestimmt. Unterschreitet die Breite des flachgelegten Gewebeschlauches einen bestimmten Wert, so verschiebt sich das Innenwerkzeug relativ zur Verarbeitungseinrichtung und löst dadurch einen Fehleralarm aus, so dass wiederum die Verarbeitungsmaschine gestoppt wird.

Die beschriebenen Methoden zur Fehlererkennung funktionieren insgesamt recht unbefriedigend. Es werden zu oft Säcke aus Schlauchstücken hergestellt, die einen Gewebefehler enthalten. So werden Säcke aus Schlauchstücken produziert, die das Innenwerkzeug passiert haben, obwohl ein, wenn auch kleiner, Gewebefehler vorgelegen hat. Auch werden Schlauchstücke verarbeitet, die zu breit waren und daher das Innenwerkzeug passieren konnten. Des Weiteren führt der Einsatz des Innenwerkzeugs oft zu unerwünschten Maschinenstillständen und damit zu Zeitverlusten.

Fehlererkennung bei Geweben, insbesondere bei Textilgeweben, werden oft mit optischen Systemen berührungslos durchgeführt. In den Druckschriften US 4 065 213, GB 2 243 847 und US 5 774 177 werden solche Systeme und Verfahren offenbart. Auch die DE 34 01 826, die US 3 962 730, die US 2005/0232475 und die US 4 920 653 offenbaren Fehlererkennungssysteme mit optischen Systemen sowie Verfahren zum Behandeln der mit Fehlern behafteten Bereichte.

Sind diese Fehler erkannt, ergibt sich nun die Schwierigkeit, die fehlerhaften Bereiche von den fehlerfreien Bereichen zu trennen. Dieses ist erst möglich, wenn der Schlauch in Schlauchabschnitte vereinzelt wird. Schlauchabschnitte, die fehlerhafte Bereiche umfassen, können dann aussortiert werden.

Die Aufgabe der vorliegenden Erfindung ist es daher, ein Verfahren und ein System vorzuschlagen, mit denen fehlerbehaftete Bereiche auffindbar sind und mit denen das Ausschleusen von Säcken oder Schlauchabschnitten mit fehlerbehafteten Bereichen vereinfacht wird.

Die Aufgabe wird gelöst durch die Merkmale des Anspruchs 1. Demnach ist vorgesehen, dass nach der Überprüfung der Bereich des Gewebematerials, der diesen Fehler enthält, mit Markierungen markiert wird, und dass in der Verarbeitungsmaschine mittels einer Ausleseeinrichtung für die Markierungen die Schlauchstücke identifiziert werden, welche den zumindest einen Fehler enthalten, wobei die Identifikation vor oder hinter der Querschneideeinrichtung erfolgt..

Mit diesem erfindungsgemäßen Verfahren kann sichergestellt werden, dass der fehlerbehaftete Gewebematerialabschnitt auch nach dem Druckprozess und gegebenenfalls einem oder mehreren Auf- und Abwickelvorgängen identifiziert wird. Durch das identifizieren der Schlauchstücke mit den fehlerbehafteten Bereichen innerhalb der Verarbeitungseinrichtung sind der Steuer- und Auswerteeinrichtung die Positionen der fehlerbehafteten Schlauchabschnitte stets bekannt, so dass die in der Verarbeitungseinrichtung vorhandenen Produktflusseinrichtungen zu passenden Zeitpunkten angesteuert werden können.

Wird das Gewebematerial der Prüfeinrichtung als Gewebeschlauch zugeführt, ist die berührungslos arbeitende Prüfeinrichtung bevorzugt außerhalb des Gewebeschlauches angeordnet. Sie kann aber grundsätzlich auch innerhalb des Gewebeschlauches angeordnet sein.

Um auch bei gewünschter Breitenkontrolle auf das Innenwerkzeug verzichten zu können, ist vorgesehen, dass mittels der Prüfeinrichtung auch die Breite des flachgelegten Gewebematerials, insbesondere des Schlauchmaterials, geprüft wird. Nicht nur zu schmale Gewebematerialabschnitte werden zuverlässig erkannt, sondern auch zu breite Gewebematerialabschnitte. Durch die bisher aufgeführten Erfindungsmerkmale werden verstärkt nur Säcke für in Ordnung befunden, die fehlerfrei sind. Die Qualität der Säcke auf dem Gutstapel wird somit verbessert.

In einer besonders vorteilhaften Ausführungsform der Erfindung erfolgt die Begutachtung des Gewebematerials mittels einer Fehlerdetektionseinrichtung, die eine Beleuchtungseinrichtung und eine Lichtdetektionseinrichtung umfasst. Dabei werden als Lichtdetektionseinrichtung bevorzugt eine oder mehrere Kameras eingesetzt. Auch Fotozellen sind für diese Zwecke anwendbar. Mit der Beleuchtungseinrichtung wird das Gewebematerial bestrahlt. Bei einem ordnungsgemäßen Gewebe gelangt von dem Licht, welches mit dem Schlauchmaterial in Wechselwirkung tritt, immer ein gleicher Anteil in die Lichtdetektionseinrichtung. Liegt jedoch ein Webfehler vor, so ändert sich der Kontrast des Materials, so dass mehr oder weniger Licht mit dem Material in Wechselwirkung tritt und somit eine höhere oder eine niedrigere Lichtmenge pro Zeiteinheit registriert wird. Die als Fehler erkannten Webfehler können beispielsweise durch das Übereinanderliegen mehrerer Webfäden oder das Fehlen von Webfäden hervorgerufen werden. Durch die Bereiche, in denen die Webfäden fehlen, dringt mehr Licht als durch die ordnungsgemäßen, also fehlerfreien Bereiche. Durch die Bereiche, in denen Webfäden übereinander liegen, dringt weniger Licht.

Vorteilhafterweise erfolgt die Begutachtung des Gewebematerials mittels der Prüfeinrichtung vor dem Beschichten und/oder vor dem Bedrucken des Gewebematerials.

Die Überprüfung ist also erfindungsgemäß nicht in der Verarbeitungsmaschine, sofern der Druckvorgang nicht "inline" in der Verarbeitungsmaschine erfolgt, sondern im Bereich der Druckmaschine und/oder der Beschichtungseinrichtung vorgesehen. Auch wenn eine Inline-Verarbeitung vorgesehen ist, erfolgt die Überprüfung erfindungsgemäß vor dem Bedrucken, also räumlich gesehen vor der Druckstation. Somit ist es möglich, das Gewebematerial zu untersuchen, bevor Aufdrucke aufgebracht werden, die die Begutachtung stören könnten. Es ist insbesondere möglich, Fehler im Gewebe, die beim Weben entstanden sind, wesentlich besser aufzuspüren. Die Fehlererkennungsrate wird dadurch erhöht und letztendlich die Qualität der gefertigten Säcke, die ausgeliefert und verkauft werden sollen, verbessert.

Um sicherzustellen, dass der fehlerbehaftete Gewebematerialabschnitt auch nach dem Druckprozess und gegebenenfalls einem oder mehreren Auf- und Abwickelvorgängen identifiziert wird, ist vorgesehen, dass der fehlerbehaftete Bereich mit Markierungen versehen wird. So kann beispielsweise der fehlerbehaftete Bereich mit einer besonderen Farbmarkierung versehen werden. Auf eine solche Markierung kann verzichtet werden, wenn der Schlauch "inline", d.h. direkt, verarbeitet wird.

Besonders vorteilhaft ist es jedoch, den Beginn sowie das Ende dieses Bereiches zu markieren. Solche Bereiche können eine beachtliche Länge aufweisen, wenn man bedenkt, dass längs verlaufende Bändchen über eine längere Strecke gegenüber den benachbarten Bändchen verschoben sein können. Die vorgeschlagene Vorgehensweise ist daher besonders interessant, da die Menge der benötigten Markierungselemente unabhängig von der Länge des fehlerbehafteten Bereichs ist. Dabei sollten sich die Markierungen für den Anfang des besagten Bereiches und für das Ende von einander unterscheiden. Dies ist insbesondere wichtig, wenn die aufgewickelte Gewebematerialbahn Anfang des besagten Bereiches und für das Ende von einander unterscheiden. Dies ist insbesondere wichtig, wenn die aufgewickelte Gewebematerialbahn noch vor der Verarbeitung in der Sackherstellungseinrichtung ein oder mehrmals umgewickelt wird. Es ist bei jedem Umwickelvorgang lediglich darauf zu achten, dass die Anfangsmarkierung nun zu einer Endmarkierung wird und umgekehrt.

Die Markierungen werden in einer vorteilhaften Weiterbildung mittels einer einfachen Tintenstrahldruckeinrichtung auf das Gewebematerial aufgebracht. Diese Tintenstrahldruckeinrichtung wird bevorzugt von einer Steuereinheit angesteuert, die ihrerseits Signale von der Detektionseinrichtung erhält. Weiterhin erhält die Steuereinrichtung auch Informationen über die Vorschubgeschwindigkeit des Schlauches, so dass die Tintenstrahldruckeinrichtung zu einem Zeitpunkt die Markierung aufbringt, zu dem der fehlerbehaftete Bereich gerade noch nicht die Tintenstrahldruckeinrichtung erreicht hat bzw. diese gerade passiert hat. Ist das Format der späteren Säcke bereits bekannt, so kann das Aufbringen der Anfangsmarkierung bereits früher bzw. das Aufbringen der Endmarkierung etwas später erfolgen, so dass die Markierungen sich mit den späteren Schnittkanten decken. Somit ist es möglich, in der Verarbeitungsmaschine, also in der Sackherstellmaschine, eine entsprechende Ausleseeinrichtung im Bereich der Quertrenninrichtung, in der der Schlauch zu Schlauchstücken vereinzelt wird, anzuordnen. Auf diese Weise kann Baulänge eingespart werden. Ansonsten wäre es notwendig, die Ausleseeinrichtung mindestens in einer Entfernung, die der größtmöglichen, auf der Verarbeitungsmaschine herstellbaren Sacklänge entspricht, vor der Quertrennstation anzuordnen.

In einer weiteren vorteilhaften Ausführungsform ist es vorgesehen, Markierungen auf das Gewebematerial aufzubringen, die Farbbestandteile enthalten, die Licht im ultravioletten Wellenlängenbereich absorbieren. In der Verarbeitungsmaschine können dann Markierungen mit ultraviolettem Licht ausgelesen werden, welches durchaus Aufdrucke, die Licht im sichtbaren Bereich absorbieren, durchdringen kann. Die Markierungen sind daher besonders zuverlässig auslesbar.

Wie bereits kurz erwähnt, ist in einer vorteilhaften Ausführungsform der Erfindung die Ausleseeinrichtung für die Markierungen in der Verarbeitungsmaschine, also in der Sackherstellmaschine, vorgesehen. Damit werden also die zuvor als fehlerhaft markierten Schlauchabschnitte innerhalb der Verarbeitungsmaschine mittels einer Ausleseeinrichtung identifiziert. In einer ersten Ausführungsform ist es vorgesehen, diese Ausleseeinrichtung in Produktionsflussrichtung vor der Querschneideinrichtung vorzusehen, da hier die noch unterbrechungsfrei an der Ausleseeinrichtung vorbei geführte Schlauchbahn kontinuierlich abgetastet werden kann. Mithilfe einer geeigneten Steuer- und Auswerteeinrichtung werden dann die als fehlerhaft erkannten Schlauchabschnitte später einem oder mehreren nach dem Querschneiden vorhandenen Schlauchabschnitten zugeordnet. In einer zweiten Ausführungsform ist diese Ausleseeinrichtung hinter der Querschneideeinrichtung angeordnet. Nach dem Erkennen einer Markierung, die den Beginn des fehlerhaften Abschnitts kennzeichnet, werden der betreffende und im Bedarfsfall alle folgenden Schlauchabschnitte bis zum Erkennen der Markierung, die das Ende des fehlerhaften Abschnitts kennzeichnet, von der Steuer- und Auswerteeinrichtung als fehlerbehaftet registriert.

Die Positionen dieser fehlerbehafteten Schlauchabschnitte sind der Steuer- und Auswerteeinrichtung zu jedem Zeitpunkt bekannt, so dass die in der Verarbeitungseinrichtung vorhandenen Produktflusstrenneinrichtungen, wie etwa Ausscheideweichen, zu passenden Zeitpunkten angesteuert werden können, so dass die fehlerbehafteten Säcke aus dem Produktfluss der übrigen Säcke oder Schlauchstücke entnommen werden können.

Da am Ende der Verarbeitungsmaschine in der Regel bereits eine entsprechende Produktflusstrenneinrichtung vorhanden ist, um die beim Verarbeitungsvorgang fehlerhaft bearbeiteten Schlauchstücke, welche zu fehlerhaften Säcken führen, ausschleusen zu können, kann diese auch dazu genutzt werden, um die Säcke, die bereits vor dem eigentlichen Verarbeitungsprozess als fehlerbehaftet registriert sind, ausschleusen zu können. Als "eigentlicher Verarbeitungsvorgang" wird beispielsweise das Anformen von Boden oder das Auf- oder Einbringen von Ventilzetteln oder Bodendeckblättern verstanden, also alle Schritte, die zum Herstellen eines Sackes aus einem Schlauchabschnitt notwendig sind.

In einer weiteren Ausführungsform der Erfindung kann eine zweite Produktflusstrenneinrichtung vor den Einrichtungen zur Verarbeitung der Schlauchstücke zu Säcken, aber hinter der Querschneideinrichtung, angeordnet sein. Zwar führt eine zweite Produktflusstrenneinrichtung zu höheren Kosten der Verarbeitungsmaschine, jedoch müssen die schon vor Beginn des eigentlichen Verarbeitungsvorganges als fehlerhaft registrierten Schlauchstücke nicht mehr verarbeitet werden, so dass Energie- und Zeiteinsparungen gegengerechnet werden müssen.

Weitere Ausführungsbeispiele der Erfindung gehen aus der gegenständlichen Beschreibung und den Ansprüchen hervor.
Die einzelnen Figuren zeigen:
- Fig. 1: Funktionsdiagramm der Gewebeherstellung
- Fig. 2: Prüfeinrichtung
- Fig. 3: Ansicht III - III aus Figur 2
- Fig. 4: Detailansicht eines Ausschnitts des Gewebes, welcher keinen Fehler aufweist
- Fig. 5: Detailansicht eines Ausschnitts des Gewebes, welcher einen Fehler aufweist
- Fig. 6: Schematische Darstellung einer Verarbeitungsmaschine

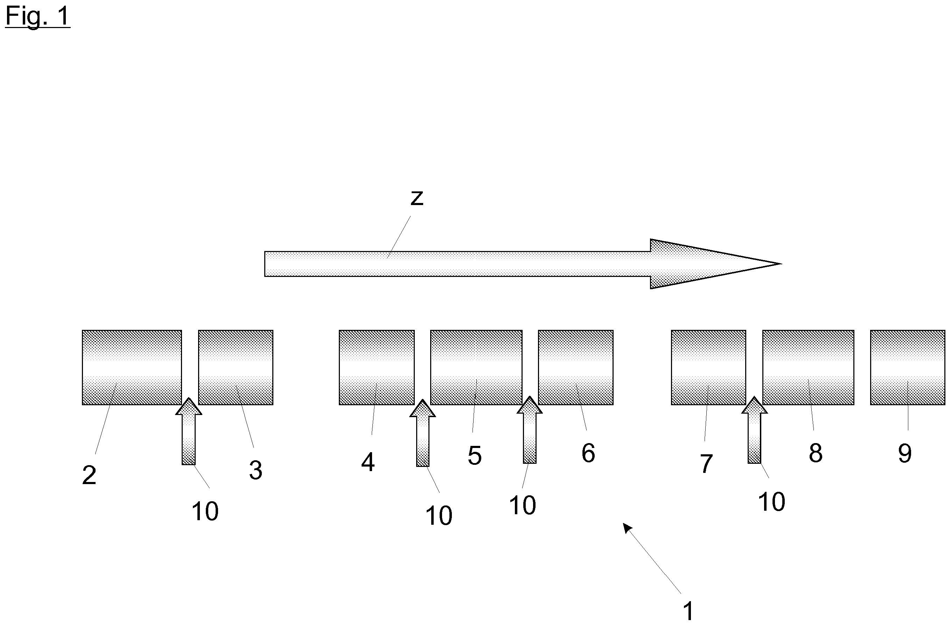

Fig. 1 zeigt eine schematische Darstellung einer Einrichtung 1 zur Herstellung einer Bahn, die aus beschichtetem Gewebe besteht, wobei das Gewebe wiederum gereckte Kunststoffbändchen umfasst. Der Pfeil z zeigt die Produktflussrichtung an.

Die Einrichtung 1 umfasst an erster Stelle eine Webeinrichtung 2, vorzugsweise einen Rundwebstuhl, mit dem aus den zugeführten, gereckten Kunststoffbändchen ein Gewebe herstellbar ist, welches in einer ersten Aufwickeleinrichtung 3 aufgewickelt wird.

Das derart aufgewickeltes Gewebematerial, welche in der Figur 1 nicht näher dargestellt ist, kann nun einer Abwickeleinrichtung 4 zugeführt werden. Von dieser aus wird das Gewebematerial einer Beschichtungseinrichtung 5 zugeführt, in welcher das Gewebematerial mit einer Beschichtung versehen wird. Diese Beschichtung ist vorzugsweise eine Kunststoffbeschichtung und weist in der Regel einen niedrigeren Schmelzpunkt als die Bändchen, aus denen das Gewebematerial hergestellt ist, auf. Bei der späteren Sackherstellung können Heizeinrichtungen wie etwa Heißluftdüsen eingesetzt werden, um die Beschichtung zwecks Verbindung verschiedener Sackbestandteile anzuschmelzen, ohne dass die Bändchen übermäßig erwärmt werden. Diese verlieren nämlich bei Wärmeinwirkung die durch das Recken erzeugte Festigkeit. In diesem Zusammenhang ist zu betonen, dass die Bändchen auch grundsätzlich vor dem Webvorgang beschichtet werden können, um die genannte Möglichkeit zur Sackherstellung bieten zu können. Jedoch werden mit dem Beschichten nach dem Webvorgang weitere Ziele verfolgt. Einerseits können sich dann die einzelnen Bändchen nicht mehr gegeneinander verschieben, andererseits ist das beschichtete Gewebematerial nicht mehr oder zumindest nicht mehr so stark wasserdurchlässig. Nach dem Beschichten des Gewebematerials wird dieses in einer weiteren Aufwickeleinrichtung 6 wieder zu einem Wickel verarbeitet.

Dieser Wickel kann dann der Abwickeleinrichtung 7 einer Druckmaschine 8 zugeführt werden, in der das Gewebematerial bedruckt werden kann, bevor es auch hier in der Aufwickelvorrichtung 9 wieder aufgewickelt wird.

Das Gewebe kann auch als Flachgewebe in der Webeinrichtung 2 erstellt werden. Einer der genannten Einrichtungen Webeinrichtung 2, Beschichtungseinrichtung 5, Druckmaschine 8 oder den Auf- und Abwickelvorrichtungen kann in diesem Fall eine nicht gezeigte Schlauchbildungseinrichtung vor- oder nachgeordnet sein. In einer solchen Einrichtung werden die Seitenkanten der Gewebebahn überlappend eingeschlagen und die Überlappungsbereiche miteinander verbunden, so dass ein Schlauch unter Ausbildung einer Längsnaht hergestellt wird. Die Position der Schlauchbildungseinrichtung ist dabei nachrangig. Sie kann auch der Aufwickeleinrichtung 9 nachgeordnet sein, dass in der Aufwickeleinrichtung eine flachliegende Gewebebahn aufgewickelt wird. Wichtig ist, dass der Verarbeitungsmaschine ein Gewebeschlauch zugeführt werden kann. In manchen Verarbeitungsmaschinen kann es jedoch von Vorteil sein, Schlauchstücke ohne Längsnaht zu verarbeiten.

Bei der Beschreibung der vorgenannten Einrichtungen fällt auf, dass jeder Bearbeitungseinrichtung eine Auf- und/oder Abwickelvorrichtung zugeordnet ist. Grundsätzlich ist denkbar, dass das Gewebematerial ohne die Zwischenschritte "Aufwickeln" und "Abwickeln" der nächsten Station zugeführt wird. In der Praxis scheitert dieser Gedanke in Regel daran, dass die Bearbeitungseinrichtungen nur mit unterschiedlichen maximalen Bearbeitungsgeschwindigkeiten betreibbar sind.

Eine Fehlerdetektionseinrichtung kann an verschiedenen Positionen in dem erfindungsgemäßen System angeordnet werden. Voraussetzung ist lediglich, dass an diesen Positionen das Gewebematerial in abgewickeltem Zustand vorliegt, wobei es unerheblich ist, ob das Gewebe als Bahn oder als Schlauch vorliegt. Diese Positionen liegen grundsätzlich zwischen der Webeinrichtung 2 und der Druckmaschine 8, also insbesondere vor der Aufwickeleinrichtung 3, zwischen der Abwickeleinrichtung 4 und der Beschichtungseinrichtung 5, zwischen der Beschichtungseinrichtung 5 und der Aufwickeleinrichtung 6 oder zwischen der Abwickeleinrichtung 7 und der Druckmaschine 8, wobei letztere Position besonders bevorzugt wird. Die genannten Positionen werden in der Figur 1 durch die Pfeile 10 verdeutlicht.

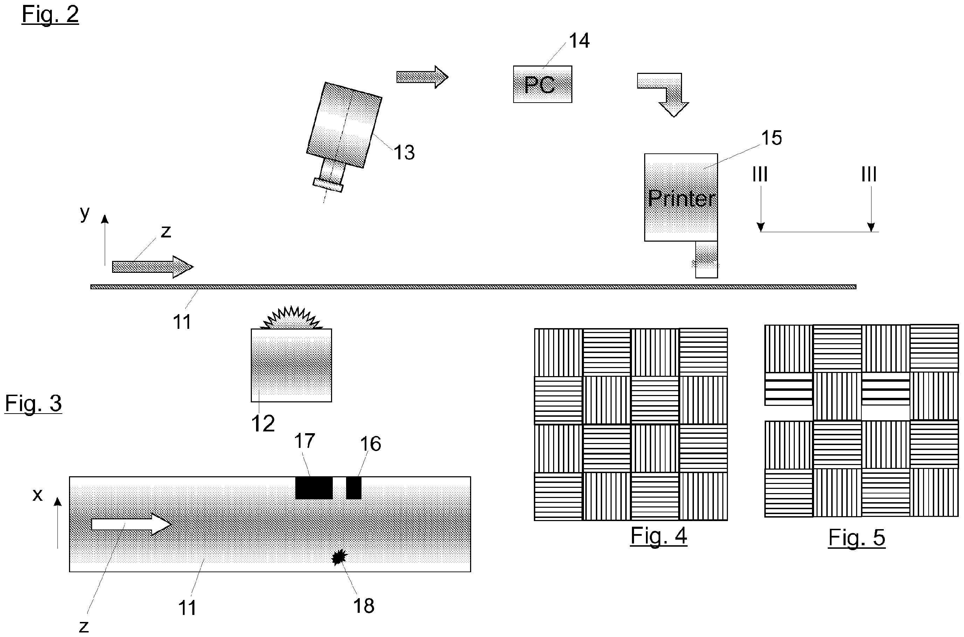

Die Figur 2 zeigt die einzelnen Bestandteile einer Prüfeinrichtung. Das Gewebematerial 11 wird in Richtung z transportiert und wird von seiner Unterseite her mit der Beleuchtungseinrichtung 12 beleuchtet. Diese Beleuchtungseinrichtung emittiert eine Strahlung, für die das Gewebematerial zumindest teilweise transparent ist. Für die meisten Kunststoffe, aus denen solche Gewebematerialien gefertigt sind, ist dieses sichtbares Licht. Entsprechend ist auf der Gegenseite, also in der Ansicht der Figur 2 auf der Oberseite, des Gewebematerials 11 zumindest ein Detektor 13 angeordnet, der das Licht, welches das Gewebematerial durchdrungen hat, aufnimmt und in elektrische Signale umsetzt. Ein solcher Detektor kann eine Kamera sein, beispielsweise eine CCD-Kamera.

Weist die Gewebebahn in gewissen Bereichen keine Fehler auf, so nimmt der Detektor 13 immer an allen Punkten der betrachteten Fläche die gleiche Lichtmenge auf. Eine solche Fläche ist in der Figur 4 dargestellt. An jeder Stelle liegen immer zwei Bändchen übereinander, wie man anhand der Schraffuren erkennt.

In der Figur 5 ist eine gleiche Fläche wie in der Figur 4 gezeigt. In dieser Figur ist zu erkennen, dass ein Bändchen schmaler ist als andere Bändchen. Somit ist nicht die gesamte Fläche mit zwei übereinander liegenden Bändchen belegt, sondern in Teilbereichen nur mit einem Bändchen. Entsprechend der an dieser Stelle reduzierten Gesamtdicke gelangt hier mehr Licht durch das Gewebe, so dass der Detektor 13 an diesen Stellen eine Kontrastveränderung sieht. Mit dem Detektor wird zwar die gesamte Bahnbreite abgetastet (Richtung x, siehe Figur 3), aber es ist dabei unerheblich, an welchem Ort in Richtung x sich der Fehler befindet. In Transportrichtung z muss der Fehler möglichst ortsaufgelöst sein. Wichtiger als eine möglichst hohe Ortsauflösung ist allerdings die Empfindlichkeit, mit der Kontrastveränderungen aufgenommen werden. Diese Kontrastveränderung wird von einer Steuer- und Recheneinheit 14 registriert. Gleichzeitig wird der Zeitpunkt dieser Registrierung aufgezeichnet. In Abhängigkeit von der Transportgeschwindigkeit des Gewebes kann nun die Steuer- und Recheneinheit 14 für jeden Zeitpunkt berechnen, an welchem Ort sich der Fehler befindet. Diese Berechnung ist notwendig, um die fehlerhafte Stelle mittels eines Druckers 15 kennzeichnen zu können. Die Steuer- und Recheneinheit triggert also den Drucker. Dieser Drucker druckt aufgrund der Triggersignale eine Markierung 16, die den Beginn des fehlerhaften Bereichs kennzeichnet, sowie eine Markierung 17 zur Kennzeichnung des Endes des fehlerhaften Bereiches. Diese Markierungen 16 und 17 sind neben dem Gewebefehler 18 in der Figur 3 symbolisiert.

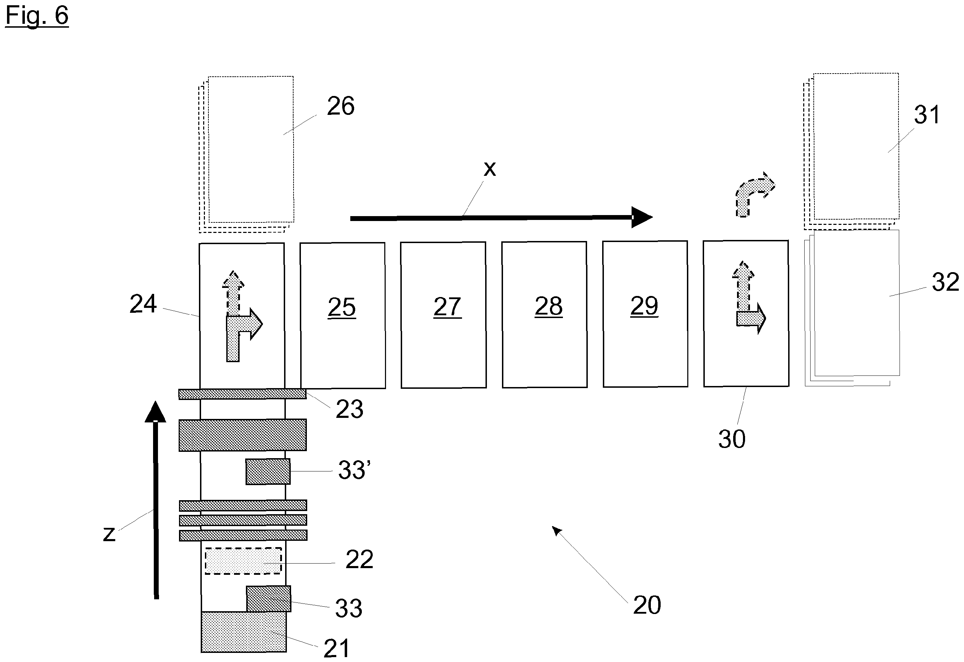

Die Fig. 6 zeigt schematisch einzelne Schritte zur Verarbeitung eines bereits vorgefertigten Gewebeschlauches zu Säcken, wie sie in einer als Verarbeitungsmaschine Sackherstellungsvorrichtung 20 erfolgen, wobei bei dieser Verarbeitung fehlerhafte Schlauchstücke bzw. Säcke ausgeschleust werden, so dass sie die Stapel der ordnungsgemäß gefertigten Säcke nicht erreichen.

Zunächst wird der Gewebeschlauch der Sackherstellungsvorrichtung zugeführt. Dies geschieht vorteilhafterweise durch Abwickeln des einen Wickel bildenden Gewebeschlauches in einer Abwicklungseinrichtung 21. Anschließend erfährt der Schlauch die so genannte Öffnung in der Öffnungsstation 22. Dabei wird der Gewebeschlauch um ein Innenwerkzeug herum geführt, welches die beiden Lagen voneinander trennt, so dass sich die Lagen, falls sie bei einem der Herstellungsschritte des Schlauches miteinander verklebt wurden, trennen. Nur bei getrennten Lagen kann sichergestellt werden, dass die folgenden Produktionsschritte ordnungsgemäß durchgeführt werden können.

Der Gewebeschlauch wird nun der Querschneideeinrichtung 23 zugeführt, die den Gewebeschlauch zu einzelnen Schlauchstücke vereinzelt.

Anschließend erfolgt eine Änderung der ursprünglichen Transportrichtung z in die neue Transportrichtung x, so dass die Schlauchstücke nun nicht mehr in Richtung ihrer Schlauchlängsachse, sondern quer hierzu transportiert werden, so dass die Enden der Schlauchstücke zwecks Anformung der Böden seitlich erreichbar sind. Diese Einrichtung zur Änderung der Transportrichtung 24 umfasst eine nicht näher dargestellte Ausscheideweiche, mithilfe welcher bereits fehlerbehaftete Schlauchabschnitte 26 aus dem Produktfluss ausgeschieden werden können.

In der folgenden Station, der Bodenöffnungsstation 25, werden beide Enden eines jeden Schlauchstücks geöffnet und die so genannten Bodenquadrate gelegt. In der darauf folgenden Ventilstation 27 wird auf eines der beiden offenen Enden ein Ventil aufgelegt und befestigt. Die offenen Böden werden nun in der Bodenschließstation 28 geschlossen, wobei zwei Laschen aufeinander gelegt werden und miteinander dauerhaft, beispielsweise durch verschweißen, verbunden werden. Den Abschluss des eigentlichen Sackherstellprozesses bildet das Aufbringen je eines Bodendeckblattes auf die Böden in der Deckblattstation 29. Dazu können die Deckblätter ebenfalls aufgeschweißt werden.

Die fertigen Säcke werden, in der Regel visuell, auf Herstellungsfehler untersucht und können mittels der Ausscheideweiche 30 sortiert werden, so dass die fehlerhaften Säcke auf dem Ausschussstapel 31 abgelegt werden können. Alle anderen Säcke können auf dem Gutstapel 32 abgelegt werden.

Erfindungsgemäß sind die fehlerbehafteten Abschnitte des Gewebeschlauches, welcher der Verarbeitungseinrichtung zugeführt werden, durch entsprechende Markierungen gekennzeichnet. Um diese Abschnitte identifizieren zu können ist in der Sackherstellvorrichtung zumindest ein Sensor 33 vorgesehen, der das Vorhandensein dieser Markierungen erkennen kann. Zudem ist dieser Sensor 33 vorteilhafterweise in der Lage, eine Anfangsmarkierung und eine Endmarkierung voneinander zu unterscheiden. Nur dann ist es möglich, den fehlerhaften Abschnitt im Gewebeschlauch eindeutig zu erkennen. Die Unterscheidung erfolgt vorteilhafterweise durch unterschiedliche Dimensionen dieser Markierungen.

Durch das Erkennen dieser Markierungen und dem Weiterleiten dieser Information an die Rechen- und Steuereinheit der Verarbeitungsmaschine ist es möglich, die Position des mit Fehlern behafteten Schlauchabschnitts zu jedem Zeitpunkt festzustellen und entsprechend eine der Ausscheideweichen so anzusteuern, dass dieser Schlauchabschnitt oder der daraus gefertigte Sack ausgeschleust werden kann.

Der Sensor 33 kann innerhalb der Verarbeitungsmaschine 20 in Transportrichtung z vor der Öffnungsstation oder zwischen Öffnungsstation und Querschneideinrichtung 23 angeordnet sein. Diese beiden möglichen Positionen sind in der Figur 6 mit 33 und 33' gekennzeichnet.

Eine nicht näher gezeigte Beleuchtungseinrichtung ist in der Nähe des Sensors 33 vorgesehen und beleuchtet den Gewebeschlauch oder die Schlauchstücke. Die Beleuchtungseinrichtung sendet dabei eine Strahlung einer Wellenlänge aus, die von dem Sensor 33 detektiert werden kann und die von den Markierungen 16 und 17, aber möglichst nicht von dem Gewebematerial reflektiert wird. Auf diese Weise ist eine zuverlässige Erkennung des Anfangs bzw. des Endes des fehlerbehafteten Bereiches möglich.

| **Bezugszeichenliste** | |
|---|---|
| 1 | Einrichtung |
| 2 | Webeinrichtung |
| 3 | Aufwickeleinrichtung |
| 4 | Abwickeleinrichtung |
| 5 | Beschichtungseinrichtung |
| 6 | Aufwickeleinrichtung |
| 7 | Abwickeleinrichtung |
| 8 | Druckmaschine |
| 9 | Aufwickeleinrichtung |
| 10 | Positionen der Fehlerdetektionseinrichtung |
| 11 | Gewebeschlauch |
| 12 | Beleuchtungseinrichtung |
| 13 | Detektor |
| 14 | Rechen- und Steuereinheit |
| 15 | Drucker |
| 16 | Anfangsmarkierung |
| 17 | Endmarkierung |
| 18 | fehlerhafte Stelle |
| 19 | |
| 20 | Sackherstellungsvorrichtung |
| 21 | Abwicklungseinrichtung |
| 22 | Öffnungsstation |
| 23 | Querschneideeinrichtung |
| 24 | Einrichtung zur Änderung der Transportrichtung |
| 25 | Bodenöffnungsstation |
| 26 | fehlerbehafteter Schlauchabschnitt |
| 27 | Ventilstation |
| 28 | Bodenschließstation |
| 29 | Deckblattstation |
| 30 | Ausscheideweiche |
| 31 | Ausschussstapel |
| 32 | Gutstapel |
| 33 | Sensor |

## Patentansprüche

1. Verfahren zur Herstellung von Säcken aus Gewebematerial (11), welches gereckte Kunststoffbändchen umfasst, wobei das Verfahren zumindest die folgenden Schritte umfasst:
- Beschichten des Gewebematerials,
- Bedrucken des Gewebematerials,
- Überprüfung des Gewebematerials zumindest auf Fehler im Gewebe mittels einer Prüfeinrichtung (12, 13),
- Erzeugen von Schlauchstücken aus dem Gewebematerial (11) mit einer Querschneideeinrichtung (23) und Anformen von Böden an die Enden der Schlauchstücke zur Herstellung von Säcken in einer Verarbeitungsmaschine (20),
- Ausscheiden eines Schlauchstücks oder eines Sacks aus dem Produktionsfluss, wenn das Gewebematerial (11) dieses Schlauchstücks oder dieses Sacks einen Fehler (18) enthält,
- wobei die Überprüfung des Gewebematerials (11) auf Fehler (18) berührungslos erfolgt,
**dadurch gekennzeichnet,**
**dass** nach der Überprüfung der Bereich des Gewebematerials, der diesen Fehler enthält, mit Markierungen (16, 17) markiert wird,
**dass** in der Verarbeitungsmaschine (20) mittels einer Ausleseeinrichtung (33) für die Markierungen (16, 17) die Schlauchstücke (26) identifiziert werden, welche den zumindest einen Fehler (18) enthalten, wobei die Identifikation vor oder hinter der Querschneideeinrichtung (23) erfolgt.

2. Verfahren nach Anspruch 1,
**dadurch gekennzeichnet,**
- **dass** das Gewebematerial als Schlauchmaterial (11) der Prüfeinrichtung (12, 13, 33) zugeführt wird, und
- **dass** die Überprüfung mittels einer Prüfeinrichtung (12, 13, 33) erfolgt, welche außerhalb des Schlauchmaterials (11) angeordnet ist.

3. Verfahren nach einem der vorstehenden Ansprüche,
**dadurch gekennzeichnet, dass**
auch die Breite des Gewebematerials (11), insbesondere des Schlauchmaterials (11), überprüft wird.

4. Verfahren nach einem der vorstehenden Ansprüche,
**dadurch gekennzeichnet, dass**
die Überprüfung des Gewebematerials (11) mittels einer Prüfeinrichtung (12, 13, 33) erfolgt, welche zumindest eine Beleuchtungseinrichtung (12) und zumindest eine Detektionseinrichtung (13), vorzugsweise eine Kamera, umfasst.

5. Verfahren nach dem vorstehenden Anspruch,
**dadurch gekennzeichnet, dass**
das Gewebematerial (11) zwischen Beleuchtungseinrichtung (12) und Detektionseinrichtung (13) hindurch geführt wird.

6. Verfahren nach einem der vorstehenden Ansprüche,
**dadurch gekennzeichnet, dass**
die Überprüfung des Gewebematerials (11) vor dem Beschichten und/oder Bedrucken des Gewebematerials (11) erfolgt.

7. Verfahren nach einem der vorstehenden Ansprüche
**dadurch gekennzeichnet, dass**
zumindest zwei Markierungen (16, 17) aufgebracht werden, von denen zumindest eine erste Markierung (16) den Beginn des Gewebematerialbereiches (11) und zumindest eine zweite Markierung (17) das Ende des Gewebematerialbereiches kennzeichnen, im dem der Fehler (18) vorliegt.

8. Verfahren nach einem der vorstehenden Ansprüche,
**dadurch gekennzeichnet, dass**
die Markierungen (16, 17) mittels einer Tintenstrahldruckeinrichtung (15) auf das Gewebematerial (11) aufgebracht werden.

9. Verfahren nach einem der vorstehenden Ansprüche,
**dadurch gekennzeichnet, dass**
die Markierungen (16, 17) Farbbestandteile enthalten, die Licht im ultravioletten Wellenlängenbereich absorbieren.

10. System (1) zur Herstellung von Säcken aus Gewebematerial (11), welches gereckte Kunststoffbändchen umfasst, wobei das System die folgenden Merkmale umfasst:
- zumindest eine Beschichtungseinrichtung (5) zum Beschichten des Gewebematerials (11),
- zumindest eine Druckmaschine (8) zum Bedrucken des Gewebematerials,
- zumindest eine Prüfeinrichtung (12, 13, 14) zum Überprüfen des Gewebematerials zumindest auf Fehler (18) im Gewebe,
- eine Verarbeitungsmaschine (20), in welcher aus dem Gewebematerial (11) Schlauchstücke mit einer Querschneideeinrichtung (23) erzeugt werden und Böden an die Enden der Schlauchstücke zur Herstellung von Säcken anformbar sind,
- wobei die Verarbeitungsmaschine (23) eine Ausscheideeinrichtung (30) zum Ausscheiden eine Schlauchstücks oder eines Sacks aus dem Produktionsfluss, wenn das Schlauchstück (26) oder der Sack einen Fehler (18) enthält, umfasst,
- wobei die zumindest eine Prüfeinrichtung (12, 13, 14, 33) zum Gewebematerial beabstandet angeordnet ist, so dass die Überprüfung berührungslos durchführbar ist.
**dadurch gekennzeichnet,**
**dass** ein Drucker (15) vorgesehen ist, mit welchem der Beginn sowie das Ende des fehlerbehafteten Bereichs mit Markierungen (16, 17) markierbar sind, und dass in der Verarbeitungsmaschine (20) eine Ausleseeinrichtung (33) für die Markierungen (16, 17) zur Identifizierung der Schlauchstücke (26), welche den zumindest einen Fehler (18) enthalten, vorgesehen ist, wobei die Ausleseeinrichtung (33) vor oder hinter der Querschneideeinrichtung (23) angeordnet ist.

## Claims

1. A method for producing bags from fabric material (11), which comprises small stretched plastic tapes, wherein the method comprises at least the following steps:
- coating the fabric material,
- printing on the fabric material,
- checking the fabric material at least for flaws in the fabric using a testing device (12, 13),
- producing tube portions from the fabric material (11) with a transverse cutting device (23) and forming bottoms onto the ends of the tube portions in order to produce bags in a processing machine,
- discharging a tube portion or a bag from the production flow if the fabric material (11) of this tube portion or this bag contains a flaw (18),
- wherein the fabric material (11) is checked for flows (18) in a contactless manner, **characterized in**
**that** after checking the area of the fabric material, which contains these flaws, it is marked with markings (16, 17),
**that** in the processing machine (20) by means of a readout device (33) for the markings (16, 17) the tube portions (26) are identified, which contain the at least one flaw (18), wherein the identification is made before or after the transverse cutting device (23).

2. A method according to Claim 1,
**characterized in**
- **that** the fabric material is fed as tube material (11) to the testing device (12, 13, 33), and
- **that** the checking is done by means of a testing device (12, 13, 33), which is arranged outside of the tube material (11).

3. A method according to any one of the preceding claims,
**characterized in that**
the width of the fabric material (11), in particular of the tube material (11), is also checked.

4. A method according to any one of the preceding claims,
**characterized in that**
the checking of the fabric material (11) is done by means of a testing device (12, 13, 33), which comprises at least a lighting device (12) and at least a detection device (13), preferably a camera.

5. A method according to the preceding claim,
**characterized in that**
the fabric material (11) is guided between lighting device (12) and detection device (13).

6. A method according to any one of the preceding claims,
**characterized in that**
the checking of the fabric material (11) is done before the coating and/or the printing on the fabric material (11).

7. A method according to any one of the preceding claims,
**characterized in that**
the two markings (16, 17) are applied, of which at least a first marking (16) identifies the beginning of the fabric material area (11) and at least a second marking (17) the end of the fabric material area, in which the flaw (18) exists.

8. A method according to any one of the preceding claims,
**characterized in that**
the markings (16, 17) are applied by means of an inkjet printing device (15) onto the fabric material (11).

9. A method according to any one of the preceding claims,
**characterized in that**
the markings (16, 17) contain color components, which absorb light in the ultraviolet wavelength range.

10. A system (1) for producing bags from fabric material (11), which comprises small stretched plastic tapes, wherein the system comprises the following features:
- at least a coating device (5) for coating the fabric material (11),
- at least a printing machine (8) for printing on the fabric material,
- at least a testing device (12, 13, 14) for checking the fabric material at least for flaws (18) in the fabric,
- a processing machine (20), in which tube portions are produced from the fabric material (11) with a transverse cutting device (23) and bottoms can be formed onto the ends of the tube portions in order to produce bags,
- wherein the processing machine (23) comprises a discharging device (30) for discharging a tube portion or a bag from the production flow, if the tube portion (26) or the bag contains a flaw (18),
- wherein the at least one testing device (12, 13, 14, 33) is arranged spaced apart from the fabric material, so that the checking can be carried out in a contactless manner, **characterized in**
**that** a printer (15) is provided, with which the beginning as well as the end of the flow-containing area can be marked with markings (16, 17), and
**that** in the processing machine (20) a readout device (33) for the markings (16, 17) is provided for the identification of the tube portions (26), which contain the at least one flaw (18), wherein the readout device (33) is arranged before or after the transverse cutting device (23).

## Revendications

1. Procédé de fabrication de sacs en matériau textile (11), qui comprend des bandelettes de matière plastique étirées, le procédé comprenant au moins étapes suivantes :
- revêtement du matériau textile,
- impression du matériau textile,
- contrôle du matériau textile au moins en ce qui concerne les défauts dans le tissu au moyen d'un dispositif de contrôle (12, 13),
- réalisation de portions tubulaires en matériau textile (11) avec un dispositif de coupe transversale (23) et formation de fonds au niveau des extrémités des portions tubulaires pour la fabrication de sacs dans une machine de traitement (20),
- séparation d'une portion tubulaire ou d'un sac du flux de production, lorsque le matériau textile (11) de cette portion tubulaire ou de ce sac contient un défaut (18),
- le contrôle du matériau textile (11) en ce qui concerne les défauts (18) ayant lieu sans contact,
**caractérisé en ce que**
après le contrôle, la zone du matériau textile qui contient ce défaut est repérée par des marquages (16, 17),
dans la machine de traitement (20), les portions tubulaires (26) qui contiennent d'au moins un défaut (18) sont identifiées au moyen d'un dispositif de lecture (33) pour les marquages (16, 17), l'identification ayant lieu avant ou après le dispositif de coupe transversale (23).

2. Procédé selon la revendication 1,
**caractérisé en ce que**
- le matériau textile est introduit sous la forme d'un matériau tubulaire (11) dans le dispositif de contrôle (12, 13, 33) et
- le contrôle a lieu au moyen d'un dispositif de contrôle (12, 13, 33) qui est disposé à l'extérieur du matériau tubulaire (11).

3. Procédé selon l'une des revendications précédentes,
**caractérisé en ce que**
la largeur du matériau textile (11), plus particulièrement du matériau tubulaire (11) est contrôlée.

4. Procédé selon l'une des revendications précédentes,
**caractérisé en ce que**
le contrôle du matériau textile (11) a lieu au moyen d'un dispositif de contrôle (12, 13, 33) qui comprend au moins un dispositif d'éclairage (12) et au moins un dispositif de détection (13), de préférence une caméra.

5. Procédé selon la revendication précédente,
**caractérisé en ce que**
le matériau textile (11) est guidé entre le dispositif d'éclairage (12) et le dispositif de détection (13).

6. Procédé selon l'une des revendications précédentes,
**caractérisé en ce que**
le contrôle du matériau textile (11) a lieu avant le revêtement et/ou l'impression du matériau textile (11).

7. Procédé selon l'une des revendications précédentes,
**caractérisé en ce que**
au moins deux marquages (16, 17) sont apposés, dont au moins un premier marquage (16) identifie le début de la zone du matériau textile (11) et au moins un deuxième marquage (17) identifie l'extrémité de la zone de matériau textile, dans laquelle le défaut existe (18).

8. Procédé selon l'une des revendications précédentes,
**caractérisé en ce que**
les marquages (16, 17) sont apposés au moyen d'un dispositif d'impression à jet d'encre (15) sur le matériau textile (11).

9. Procédé selon l'une des revendications précédentes,
**caractérisé en ce que**
les marquages (16, 17) contiennent des composants colorés qui absorbent la lumière dans le domaine de longueurs d'onde ultraviolet.

10. Système (1) pour la fabrication de sacs en matériau textile (11), qui comprend des bandelettes de matière plastique étirées, le système présentant les caractéristiques suivantes :
- au moins un dispositif de revêtement (5) pour le revêtement du matériau textile (11),
- au moins une imprimante (8) pour l'impression du matériau textile,
- au moins un dispositif de contrôle (12, 13, 14) pour le contrôle du matériau textile en ce qui concerne les défauts (18) dans le tissu,
- une machine de traitement (20), dans laquelle des portions tubulaires sont produites à partir du matériau textile (11) avec un dispositif de coupe transversale (23) et des fonds sont formés au niveau des extrémités des portions tubulaires pour la fabrication de sacs,
- la machine de traitement (23) comprenant un dispositif de coupe (30) pour la séparation d'une portion tubulaire ou d'un sac du flux de production lorsque la portion tubulaire (26) ou le sac contient un défaut,
- l'au moins un dispositif de contrôle (12, 13, 14, 33) étant disposé à une certaine distance du matériau textile, de façon à ce que le contrôle puisse être effectué sans contact,
**caractérisé en ce que**
une imprimante (15) est prévue, avec laquelle le début ainsi que l'extrémité de la zone contenant des défauts peut être marquée avec des marquages (16, 17) et
dans la machine de traitement (20), est prévu un dispositif de lecture (33) pour les marquages (16, 17) pour l'identification des portions tubulaires (26) qui contiennent l'au moins un défaut (18), le dispositif de lecture (33) étant disposé avant ou après le dispositif de coupe transversale (23).
